# EUROPEAN PATENT APPLICATION

(11) **EP 4 733 618 A1**
(43) Date of publication of application: **29.04.2026**
(21) Application number: 24838448.9
(22) Date of filing: 17.05.2024
(51) Int. Cl.: F16D 65/14, F16D 121/18, B60T 13/74, B60L 7/24

(54) **ELECTRO-MECHANICAL BRAKE FOR INTEGRATED DRIVE SHAFT, AND VEHICLE**

(30) Priority: 13.07.2023 CN 202321852474 U
(71) Applicant: Huawei Digital Power Technologies Co., Ltd., Shenzhen, Guangdong 518043 (CN)
(72) Inventor: MAO, Yan, Shenzhen, Guangdong 518043 (CN); ZHU, Lingfeng, Shenzhen, Guangdong 518043 (CN); SUN, Yi, Shenzhen, Guangdong 518043 (CN)
(74) Representative: Isarpatent
(86) International application number: PCT/CN2024/093952
(87) International publication number: WO 2025/011189

(57) **Abstract**

This application provides an electro-mechanical brake apparatus with an integrated transmission shaft, and a vehicle. The electro-mechanical brake apparatus includes a brake motor and a gearbox, the brake motor includes a motor shaft, in an axial direction of the motor shaft, the brake motor is adjacently fastened to the gearbox, an end of the motor shaft extends toward the gearbox and is in a transmission connection to the gearbox, the motor shaft rotates and drives, by using the gearbox, a brake to brake a vehicle, and the brake motor includes a remote bearing and a near bearing. An inner ring of the remote bearing is sleeved at an end that is of the motor shaft and that is away from the gearbox, and an outer ring of the remote bearing is supported by a housing of the brake motor. An inner ring of the near bearing is sleeved on a middle section of the motor shaft, and an outer ring of the near bearing is supported by the housing of the brake motor or a housing of the gearbox. In this application, the motor shaft of the brake motor in the electro-mechanical brake apparatus is further used as an input shaft of the gearbox, improving integration of the electro-mechanical brake apparatus and reducing a size.

## Description

### CROSS-REFERENCE TO RELATED APPLICATIONS

This application claims priority to Chinese Patent Application No. 202321852474.X, filed with the China National Intellectual Property Administration on July 13, 2023 and entitled "ELECTRO-MECHANICAL BRAKE APPARATUS WITH INTEGRATED TRANSMISSION SHAFT, AND VEHICLE", which is incorporated herein by reference in its entirety.

### TECHNICAL FIELD

This application relates to the field of vehicle technologies, and specifically, to an electro-mechanical brake apparatus with an integrated transmission shaft, and a vehicle.

### BACKGROUND

An electro-mechanical brake (electro-mechanical brake, EMB) apparatus uses a motor and a mechanical transmission mechanism to drive a brake to implement braking. The electro-mechanical brake apparatus features a simple structure, high responsiveness, a stable load transfer, no need to dispose a hydraulic pipe, and the like, and has high transmission efficiency. The electro-mechanical brake apparatus can improve safety, maneuverability, and comfort of a vehicle.

A motor, a mechanical transmission mechanism, and a brake in an existing electro-mechanical brake apparatus are independent components, and an integration level is low. As a result, the electro-mechanical brake apparatus is too large in size to be arranged in the vehicle.

### SUMMARY

This application provides an electro-mechanical brake apparatus with an integrated transmission shaft, and a vehicle. A motor shaft of a brake motor is further used as an input shaft of a gearbox, improving integration of the electro-mechanical brake apparatus and reducing a size. This application specifically includes the following solutions.

According to a first aspect, this application provides an electro-mechanical brake apparatus with an integrated transmission shaft, where the electro-mechanical brake apparatus includes a brake motor and a gearbox, the brake motor includes a motor shaft, in an axial direction of the motor shaft, the brake motor is adjacently fastened to the gearbox, an end of the motor shaft extends toward the gearbox and is in a transmission connection to the gearbox, the motor shaft rotates and drives, by using the gearbox, a brake to brake a vehicle, and the brake motor includes a remote bearing and a near bearing;
an inner ring of the remote bearing is sleeved at an end that is of the motor shaft and that is away from the gearbox, and an outer ring of the remote bearing is supported by a housing of the brake motor; and
an inner ring of the near bearing is sleeved on a middle section of the motor shaft, and an outer ring of the near bearing is supported by the housing of the brake motor or a housing of the gearbox.

In this application, the electro-mechanical brake apparatus drives, by using the brake motor, the gearbox to rotate, to drive the brake to brake the vehicle. The motor shaft of the brake motor extends into the gearbox and is in a transmission connection to the gearbox, and the motor shaft of the brake motor may synchronously implement an input shaft function of the gearbox. This eliminates a need for a structure through which the motor shaft is in a transmission connection to the input shaft, simplifies an internal structure of the electro-mechanical brake apparatus, and reduces a size.

In addition, the electro-mechanical brake apparatus in this application supports the motor shaft through cooperation between the near bearing and the remote bearing, to ensure smooth rotation of the motor shaft both in the brake motor and in the gearbox. In comparison with a structure in which a motor shaft and an input shaft are separated, in this application, a quantity of bearings in the electro-mechanical brake apparatus is reduced. This further simplifies an internal structure of the electro-mechanical brake apparatus and reduces a size.

In an implementation, the motor shaft includes a transmission section, in the axial direction of the motor shaft, the transmission section is located on a side that is of the near bearing and that is away from the remote bearing, and in a circumferential direction of the motor shaft, engagement teeth configured for a transmission connection to the gearbox are evenly distributed on the transmission section.

In this implementation, the transmission section is disposed on a side that is of the motor shaft and that is close to the gearbox, and the engagement teeth in a transmission connection to the gearbox are disposed on the transmission section, so that a motor gear structure of the gearbox is further integrated into the motor shaft. This eliminates a need for cooperation of an independent motor gear installed on the motor shaft, simplifies an internal structure of the electro-mechanical brake apparatus, and reduces a size.

In an implementation, in a radial direction of the motor shaft, a radius of the engagement teeth is less than a radius of an inner hole of the near bearing.

In this implementation, the radius of the engagement teeth is less than the radius of the inner hole of the near bearing, so that the near bearing is allowed to be sleeved on the middle section of the motor shaft from a side close to the transmission section. This facilitates installation of the near bearing.

In an implementation, in the axial direction of the motor shaft, the near bearing is fastened to the motor shaft and the remote bearing is slidably connected to the motor shaft.

In this implementation, in an operating process of the brake motor and in a process in which the transmission section cooperates with the gearbox to perform transmission, the motor shaft forms axial stress concentration due to an action such as heat of the brake motor or an engagement force of the gearbox. The motor shaft is slidably connected to the remote bearing, so that a part of an axial stress of the motor shaft can be released. This protects the motor shaft. The motor shaft is fastened to the near bearing, so that a relative distance between the transmission section and the gearbox can be maintained. This ensures reliable transmission between the transmission section and the gearbox.

In an implementation, the brake motor includes a snap ring, in the axial direction of the motor shaft, the motor shaft includes a near step surface and a snap ring groove that are spaced apart, and the snap ring is embedded in the snap ring groove; and
in the axial direction of the motor shaft, a distance between the near step surface and the snap ring is equal to a thickness of the near bearing, and the snap ring is configured to fasten the near bearing to the motor shaft.

In this implementation, the near bearing is relatively fastened to the motor shaft by using the snap ring and the near step surface of the motor shaft.

In an implementation, the brake motor includes an elastic member, in the axial direction of the motor shaft, the elastic member abuts between the housing of the brake motor and the remote bearing, and the elastic member is configured to provide a pushing force for the remote bearing, to enable the remote bearing to be attached to a remote step surface of the motor shaft.

In this implementation, the remote bearing is slidably connected to the motor shaft by using the elastic member and the remote step surface of the motor shaft, and the elastic member is further configured to provide the pushing force for the remote bearing, so that the remote bearing is attached to the remote step surface of the motor shaft.

In an implementation, the electro-mechanical brake apparatus includes a position sensor configured to monitor a rotation angle of the brake motor, and the position sensor includes a stator and a rotor;
the rotor is located at an end part of the motor shaft and is coaxially fastened to the motor shaft; and
the stator is fastened relative to the housing of the gearbox or the housing of the brake motor, and a central axis of the stator coincides with a rotation axis of the motor shaft.

In this implementation, the rotor of the position sensor may be disposed at the end part of the motor shaft of the brake motor. In addition, because a part of the motor shaft is located on a side of the gearbox, the rotor may be disposed at an end part on a side that is of the motor shaft and that is close to the brake motor or an end part on the side that is of the motor shaft and that is close to the gearbox. Correspondingly, the stator of the position sensor is fastened to the housing of the brake motor or the housing of the gearbox, to allow rotation of the rotor to implement a monitoring function.

In an implementation, the stator is fastened relative to the housing of the gearbox, and a spacer is disposed in the housing of the gearbox;
a thickness direction of the spacer is parallel to the axial direction of the motor shaft; and
in the axial direction of the motor shaft, the transmission section, the spacer, and the stator are sequentially arranged.

In this implementation, the stator is fastened to the housing of the gearbox, and the rotor is correspondingly disposed at the end part that is of the motor shaft and that is close to the gearbox. The spacer to separate the gearbox and the position sensor is further disposed in the housing, to avoid the following case: Contact between a lubricant in the gearbox and the position sensor affects monitoring precision.

In an implementation, the position sensor is a magnetoresistive sensor, and in the axial direction of the motor shaft, the rotor and the stator of the position sensor are spaced apart; or
the position sensor is an electric eddy current sensor or a photoelectric sensor, the stator of the position sensor is coaxially sleeved on a periphery of the rotor, and in the radial direction of the motor shaft, an outer circumferential surface of the rotor and an inner circumferential surface of the stator are spaced apart.

In this implementation, the rotor and the stator of the magnetoresistive sensor are spaced apart in the axial direction of the motor shaft, and the rotor and the stator of the electric eddy current sensor or the photoelectric sensor are spaced apart in the radial direction of the motor shaft. Different types of position sensors can separately implement reliable installation and monitoring functions.

In an implementation, the spacer is provided with a through hole that allows the motor shaft to pass through, the housing of the gearbox includes an oil sealing member, and an outer circumferential surface of the oil sealing member is attached to an inner circumferential surface of the through hole to seal the through hole;
the position sensor is a magnetoresistive sensor, and the oil sealing member is sleeved on the periphery of the rotor; or
the position sensor is an electric eddy current sensor or a photoelectric sensor, and the oil sealing member is sleeved on a periphery of the motor shaft.

In this implementation, the oil sealing member is disposed between the motor shaft and the spacer, or the oil sealing member is disposed between the rotor and the spacer, so that the through hole of the spacer can be effectively sealed, and direct contact between the lubricant in the gearbox and the position sensor can be avoided.

In an implementation, the electro-mechanical brake apparatus includes a circuit board, and the circuit board is electrically connected to the brake motor to drive the motor shaft to rotate;
the circuit board is located on a side that is of the spacer and that faces the stator, and the circuit board and the spacer are arranged in parallel; and
the circuit board is fastened in the housing of the gearbox, and the stator is fastened to the circuit board.

In this implementation, the stator of the position sensor is fastened to the circuit board, and a signal collected by the position sensor may be directly received and processed by using a component on the circuit board. In addition, the circuit board is further electrically connected to the brake motor to drive the motor shaft to rotate. This further improves integration of the electro-mechanical brake apparatus in this application and reduces a size.

In an implementation, in the axial direction of the motor shaft, a thickness of the stator is greater than a thickness of the circuit board, and the stator is embedded in a positioning hole of the circuit board.

In this implementation, the stator is embedded in the positioning hole of the circuit board, so that after the stator is assembled, a thickness of the circuit board can be compressed, and space occupied by the circuit board in the housing can be reduced.

In an implementation, the gearbox includes a parking ratchet, the parking ratchet is sleeved on the motor shaft and is fastened to the motor shaft in the circumferential direction of the motor shaft, and the parking ratchet is configured to fit an external ratchet to limit rotation of the motor shaft.

In this implementation, the parking ratchet is disposed on the motor shaft, and the external ratchet may extend into the housing to limit the rotation of the motor shaft, so that the electro-mechanical brake apparatus further has a parking function.

In an implementation, the motor shaft includes a limiting section, the limiting section is located on the side that is of the near bearing and that is away from the remote bearing in the axial direction of the motor shaft, and at least one spline configured to match a spline groove of the parking ratchet is disposed on the limiting section in the circumferential direction of the motor shaft.

In this implementation, the spline of the limiting section cooperates with the spline groove of the parking ratchet, so that the parking ratchet is fastened relative to the motor shaft in the circumferential direction of the motor shaft, to achieve that rotation of the motor shaft is limited by using the parking ratchet.

According to a second aspect, this application provides a vehicle, including a wheel and the electro-mechanical brake apparatus provided in any one of the foregoing implementations. The electro-mechanical brake apparatus is configured to brake the wheel.

The vehicle provided in the second aspect of this application is braked by using the electro-mechanical brake apparatus provided in the first aspect of this application. Because the electro-mechanical brake apparatus provided in the first aspect of this application is small in size, internal space of the vehicle in this application is saved.

### BRIEF DESCRIPTION OF DRAWINGS

FIG. 1 is a diagram of an operating scenario of a vehicle according to an embodiment of this application;
FIG. 2 is a planar diagram of a partial structure of an electro-mechanical brake apparatus from a side perspective according to an embodiment of this application;
FIG. 3 is a diagram of an appearance structure of a brake of an electro-mechanical brake apparatus from a side perspective according to an embodiment of this application;
FIG. 4 is a sectional diagram of a structure of the brake of the electro-mechanical brake apparatus from a side perspective according to the embodiment shown in FIG. 3 of this application;
FIG. 5 is a diagram of an appearance structure of a brake motor and a gearbox of an electro-mechanical brake apparatus according to an embodiment of this application;
FIG. 6 is an exploded diagram of structures of the brake motor and the gearbox of the electro-mechanical brake apparatus from a side perspective according to the embodiment shown in FIG. 5 of this application;
FIG. 7 is a sectional diagram of a structure of a brake motor of an electro-mechanical brake apparatus from a side perspective according to an embodiment of this application;
FIG. 8 is a sectional diagram of a structure of a brake motor of an electro-mechanical brake apparatus from a side perspective according to an embodiment of this application;
FIG. 9 is a sectional diagram of a structure of a brake motor of an electro-mechanical brake apparatus from a side perspective according to an embodiment of this application;
FIG. 10 is a sectional diagram of a structure of a brake motor of an electro-mechanical brake apparatus from a side perspective according to an embodiment of this application;
FIG. 11 is a sectional diagram of a structure of a brake motor of an electro-mechanical brake apparatus from a side perspective according to an embodiment of this application; and
FIG. 12 is an enlarged diagram of a partial structure of a brake motor of an electro-mechanical brake apparatus at a position A from a side perspective according to an embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In the descriptions of this application, it should be understood that an orientation or a position relationship indicated by the terms "above", "below", "front", "back", "top", "bottom", "inside", "outside", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides an electro-mechanical brake apparatus with an integrated transmission shaft. The electro-mechanical brake apparatus includes a brake motor and a gearbox, the brake motor includes a motor shaft, in an axial direction of the motor shaft, the brake motor is adjacently fastened to the gearbox, an end of the motor shaft extends toward the gearbox and is in a transmission connection to the gearbox, the motor shaft rotates and drives, by using the gearbox, a brake to brake a vehicle, and the brake motor includes a remote bearing and a near bearing. An inner ring of the remote bearing is sleeved at an end that is of the motor shaft and that is away from the gearbox, and an outer ring of the remote bearing is supported by a housing of the brake motor. An inner ring of the near bearing is sleeved on a middle section of the motor shaft, and an outer ring of the near bearing is supported by the housing of the brake motor or a housing of the gearbox. In this application, a structure through which the motor shaft is in a transmission connection to the input shaft is eliminated in the electro-mechanical brake apparatus, simplifying an internal structure of the electro-mechanical brake apparatus, and reducing a size.

This application provides a vehicle, including a wheel and the electro-mechanical brake apparatus. The electro-mechanical brake apparatus is configured to brake the wheel. Because the electro-mechanical brake apparatus is small in size, internal space of the vehicle in this application is saved.

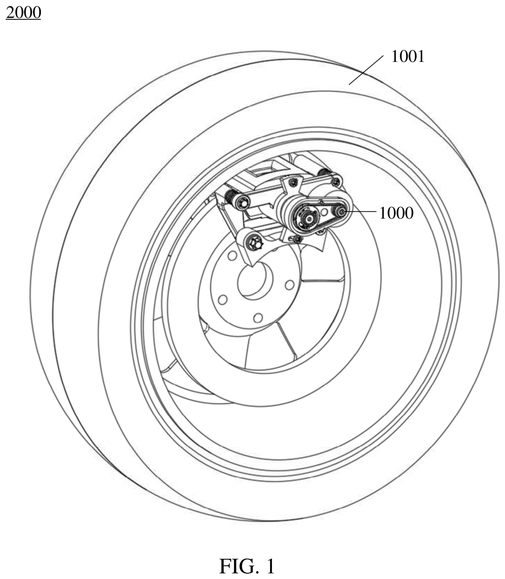

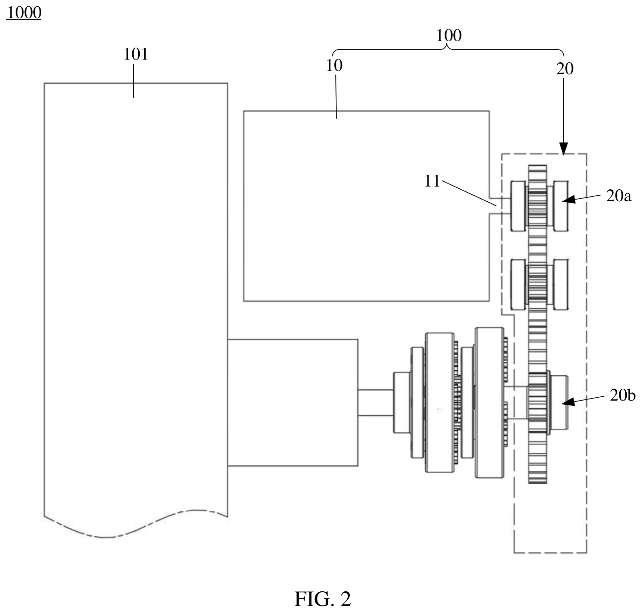

FIG. 1 is a diagram of an operating scenario of a vehicle 2000 according to an embodiment of this application. FIG. 2 is a planar diagram of a partial structure of an electro-mechanical brake apparatus 100 from a side perspective according to an embodiment of this application. As shown in FIG. 1 and FIG. 2, the vehicle 2000 provided in this embodiment of this application includes a wheel 1001 and an electro-mechanical brake system 1000. The electro-mechanical brake system 1000 includes an electro-mechanical brake apparatus 100 and a brake 101. The electro-mechanical brake apparatus 100 is fastened to the wheel 1001, and the brake 101 is configured to brake the wheel 1001 to brake the vehicle 2000. The wheel 1001 is configured to implement a function of the vehicle 2000 to travel on the ground. The electro-mechanical brake apparatus 100 is configured to brake the wheel 1001, to control and adjust a rotation speed of the wheel 1001, and further control traveling of the vehicle 2000.

In the embodiment shown in FIG. 1, only one wheel 1001 and one electro-mechanical brake apparatus 100 are used as examples for description. In an actual application scenario, the electro-mechanical brake apparatus 100 may be correspondingly disposed on each wheel 1001 of the vehicle 2000.

As shown in FIG. 2, the electro-mechanical brake apparatus 100 in this application includes a brake motor 10 and a gearbox 20. The brake motor 10 is configured to provide a driving force for the brake 101, to drive the brake 101 to achieve braking effect on the wheel 1001. The gearbox 20 is in a transmission connection between the brake motor 10 and the brake 101, and the brake motor 10 drives, by using the gearbox 20, the brake 101 to brake the vehicle 2000.

Specifically, as shown in FIG. 2, the brake motor 10 includes a motor shaft 11, and the brake motor 10 and the gearbox 20 are adjacently fastened in an axial direction of the motor shaft 11. An end of the motor shaft 11 extends toward a direction of the gearbox 20 and is in a transmission connection to the gearbox 20. The motor shaft 11 rotates and drives, by using the gearbox 20, the brake 101 to brake the vehicle 2000.

In other words, the brake motor 10 and the gearbox 20 are adjacently arranged, and the motor shaft 11 of the brake motor 10 extends into the gearbox 20 and is in a transmission connection to the gearbox 20. When the motor shaft 11 of the brake motor 10 rotates around an axis of the motor shaft 11, the gearbox 20 is driven to rotate synchronously, to achieve effect of synchronously driving the gearbox 20 to rotate.

The gearbox 20 includes an input end 20a and an output end 20b, and the input end 20a and the output end 20b are disposed side by side in a direction perpendicular to the motor shaft 11. The input end 20a is in a transmission connection to the motor shaft 11 extending out of the brake motor 10, and the output end 20b is in a transmission connection to the brake 101, so that when the motor shaft 11 of the brake motor 10 rotates and drives the gearbox 20 to rotate, the gearbox 20 can drive the brake 101 to act.

To facilitate an understanding of a process in which the electro-mechanical brake apparatus 100 in this application brakes the vehicle 2000, embodiments in this specification of this application first describe the brake 101.

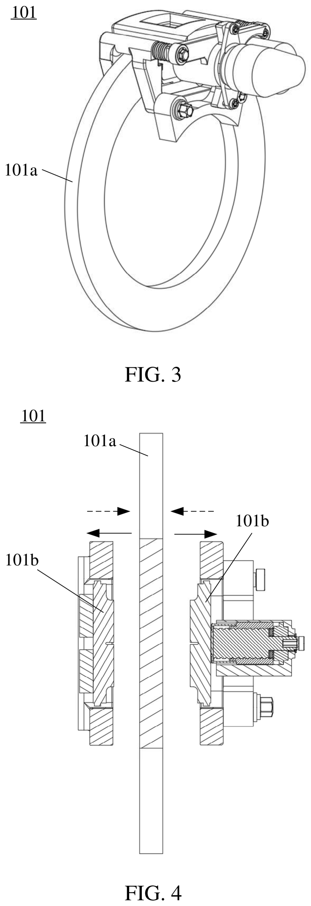

FIG. 3 is a diagram of an appearance structure of the brake 101 from a side perspective according to an embodiment of this application. FIG. 4 is a sectional diagram of a structure of the brake 101 from a side perspective according to the embodiment shown in FIG. 3 of this application. As shown in FIG. 3 and FIG. 4, the brake 101 includes a brake disc 101a and a friction plate 101b. The brake disc 101a is fastened to the wheel 1001 of the vehicle 2000. In a traveling process of the vehicle 2000, the brake disc 101a may rotate with the wheel 1001.

There are two friction plates 101b, the two friction plates 101b are arranged on two opposite sides of the brake disc 101a in a thickness direction of the brake disc 101a, and the friction plates 101b are in a transmission connection to the gearbox 20.

When the brake motor 10 drives, by using the gearbox 20, the brake 101 to brake the vehicle 2000, the gearbox 20 drives the two friction plates 101b to move close to each other (as shown by dashed arrows in the figure), and the two friction plates 101b may be respectively in contact with two opposite end surfaces of the brake disc to generate friction forces, to reduce a rotation speed of the brake disc. Because the brake disc rotates synchronously with the wheel 1001, a decrease in the rotation speed of the brake disc synchronously causes a decrease in the rotation speed of the wheel 1001, to achieve braking effect on the wheel 1001, and implement a function of the electro-mechanical brake apparatus 100 to brake the vehicle 2000.

The following describes the brake motor 10 and the gearbox 20 of the electro-mechanical brake apparatus 100 in detail with reference to the accompanying drawings and embodiments in this specification of this application.

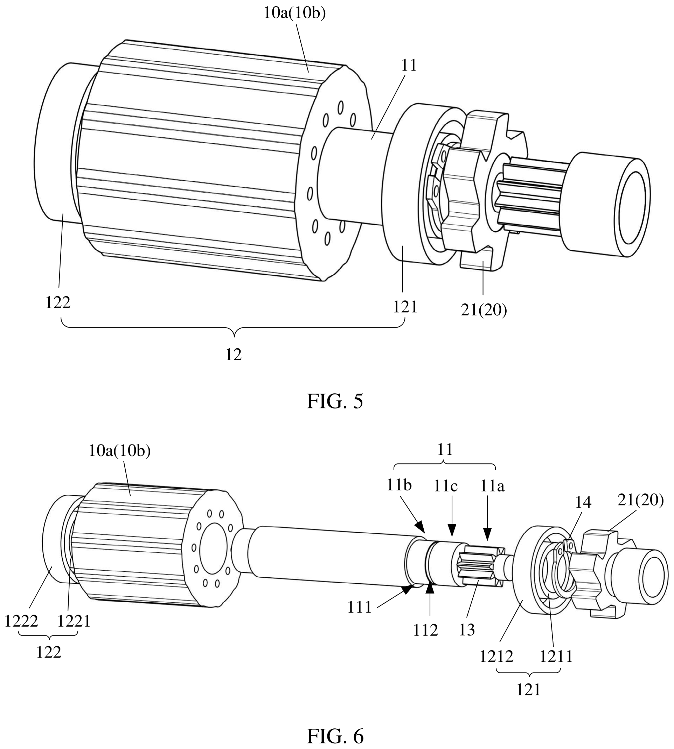

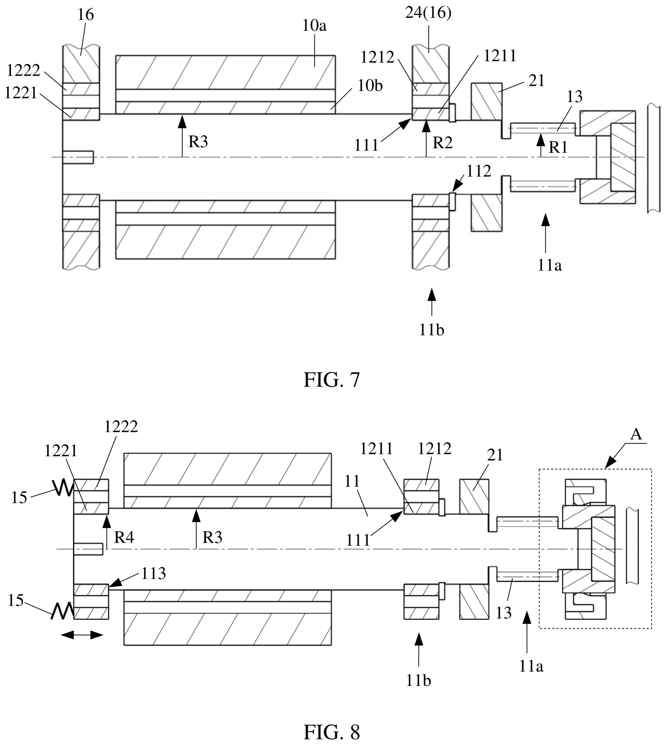

FIG. 5 is a diagram of an appearance structure of the brake motor 10 and the gearbox 20 of the electro-mechanical brake apparatus 100 according to an embodiment of this application. FIG. 6 is an exploded diagram of structures of the brake motor 10 and the gearbox 20 of the electro-mechanical brake apparatus 100 from a side perspective according to the embodiment shown in FIG. 5 of this application. FIG. 7 is a sectional diagram of a structure of the brake motor 10 of the electro-mechanical brake apparatus 100 from a side perspective according to an embodiment of this application.

As shown in FIG. 7, the brake motor 10 includes a motor stator 10a and a motor rotor 10b, and the motor rotor 10b is sleeved on the motor shaft 11. In a radial direction of the motor shaft 11, the motor stator 10a is disposed at a spacing at a periphery of the motor rotor 10b are spaced apart, and is fastened to a housing 16 of the brake motor 10. An excitation current is applied to the brake motor 10, so that an alternating magnetic field may be generated between the motor stator 10a and the motor rotor 10b to drive the motor rotor 10b to drive the motor shaft 11 to rotate around an axis of the motor shaft 11.

As shown in FIG. 5, the brake motor 10 includes two bearings 12. The two bearings 12 are spaced apart in the axial direction of the motor shaft 11, and the two bearings 12 are both sleeved on the motor shaft 11, to achieve supporting effect on the motor shaft 11, and ensure that the motor shaft 11 rotates around the axis of the motor shaft 11.

Specifically, in an axial direction of the motor rotor 10b, two opposite ends of the motor shaft 11 each extend from the motor rotor 10b. The two bearings 12 include a near bearing 121 and a remote bearing 122. The near bearing 121 and the remote bearing 122 are spaced apart in the axial direction of the motor shaft 11 on two opposite sides of the motor rotor 10b, and the near bearing 121 is closer to the gearbox 20 than the remote bearing 122.

An inner ring 1221 of the remote bearing 122 is sleeved at an end that is of the motor shaft 11 and that is away from the gearbox 20, and an outer ring 1222 of the remote bearing 122 is supported by the housing 16 of the brake motor 10.

In other words, with reference to FIG. 6 and FIG. 7, the remote bearing 122 is disposed on a side that is of the motor rotor 10b and that is away from the gearbox 20, the outer ring 1222 of the remote bearing 122 is fastened to the housing 16 of the brake motor 10, and the inner ring 1221 of the remote bearing 122 is sleeved on the motor shaft 11 and fastened relative to the motor shaft 11.

Because the inner ring 1221 of the remote bearing 122 may rotate relative to the outer ring 1222 of the remote bearing 122, the remote bearing 122 can further enable the motor shaft 11 to rotate around the axis of the motor shaft 11 while ensuring that a relative position and a relative distance between the motor shaft 11 and the housing 16 of the brake motor 10 are fixed.

An inner ring 1211 of the near bearing 121 is sleeved on a middle section 11b of the motor shaft 11, and an outer ring 1212 of the near bearing 121 is supported by the housing 16 of the brake motor 10 or is supported by a housing 24 of the gearbox 20. In the axial direction of the motor shaft 11, the middle section 11b is located between the two opposite ends of the motor shaft 11, and is located on a side that is of the motor rotor 10b and that is away from the remote bearing 122.

With reference to FIG. 6 and FIG. 7, the near bearing 121 is disposed between the two opposite ends of the motor shaft 11 in the axial direction of the motor shaft 11, and the outer ring 1212 of the near bearing 121 is fastened to the housing 16 of the brake motor 10 or is supported by the housing 24 of the gearbox 20.

The brake motor 10 and the gearbox 20 are adjacently fastened in the axial direction of the motor shaft 11, and an end that is of the motor shaft 11 and that is away from the remote bearing 122 is supported by the near bearing 121, and extends into the gearbox 20 to be in a transmission connection to the gearbox 20. In this way, an end that is used to support the motor shaft 11 and that is away from the remote bearing 122 may be fastened to the housing 16 of the brake motor 10 or the housing 24 of the gearbox 20, and both cases can achieve stable supporting effect on the motor shaft 11. To be specific, integration effect between the brake motor 10 and the gearbox 20 is improved while a quantity of components configured to support the motor shaft 11 is reduced, and a structural design in the electro-mechanical brake apparatus 100 in this application is simplified to reduce a size.

In addition, the inner ring 1211 of the near bearing 121 may rotate relative to the outer ring 1212 of the near bearing 121. Therefore, the near bearing 121 can further enable the motor shaft 11 to rotate around the axis of the motor shaft 11 while implementing that a relative position between the motor shaft 11 and the housing 16 of the brake motor 10 or a position at which the near bearing 121 is supported by the housing 24 of the gearbox 20 is fixed.

It may be understood that the near bearing 121 cooperates with the remote bearing 122, and the motor shaft 11 can be supported at different positions in the axial direction of the motor shaft 11, so that a position of the motor shaft 11 relative to the housing is fixed, and the motor shaft 11 can rotate stably around the axis of the motor shaft 11. This ensures effect of the motor shaft 11 to drive the gearbox 20 to rotate synchronously.

In other words, the near bearing 121 cooperates with the remote bearing 122 to support the motor shaft 11, to ensure smooth rotation of the motor shaft 11 both in the brake motor 10 and in the gearbox 20.

As shown in FIG. 6 and FIG. 7, in a circumferential direction of the motor shaft 11, engagement teeth 13 configured for a transmission connection to the gearbox 20 are evenly distributed on a transmission section 11a. In the axial direction of the motor shaft 11, the transmission section 11a is located on a side that is of the near bearing 121 and that is away from the remote bearing 122.

Specifically, as shown in FIG. 7, the transmission section 11a of the motor shaft 11 extends into the gearbox 20, and the engagement teeth 13 evenly distributed in a circumferential direction of the transmission section 11a can be engaged with the gearbox 20, so that a transmission connection between the gearbox 20 and the motor shaft 11 can be implemented. When the brake motor 10 drives the motor shaft 11 to rotate, the motor shaft 11 synchronously drives the gearbox 20 to drive the brake 101 to brake the vehicle 2000 by using the engagement teeth 13 evenly distributed in the circumferential direction of the motor shaft 11. In this case, the motor shaft 11 is used as a power input shaft of the gearbox 20 for transmission of the gearbox 20.

It may be understood that the transmission section 11a is disposed on a side that is of the motor shaft 11 and that is close to the gearbox 20, and the engagement teeth 13 in a transmission connection to the gearbox 20 are disposed on the transmission section 11a, so that a motor gear structure of the gearbox 20 is further integrated into the motor shaft 11. This eliminates a need for cooperation of an independent motor gear installed on the motor shaft, simplifies an internal structure of the electro-mechanical brake apparatus 100, and reduces a size.

In addition, the motor shaft 11 of the brake motor 10 extends into the gearbox 20 and is in a transmission connection to the gearbox 20. The motor shaft 11 of the brake motor 10 may be simultaneously constructed as an input shaft of the gearbox 20, that is, a function of the input shaft of the gearbox 20 is implemented. In this way, the input shaft of the gearbox 20 does not need to be separately disposed, and a mechanical part for a transmission connection between the motor shaft 11 and the input shaft can be eliminated. This further simplifies the internal structure of the electro-mechanical brake apparatus 100 is further simplified and reduces a size.

In an embodiment, as shown in FIG. 5 and FIG. 6, the gearbox 20 includes a parking ratchet 21, the parking ratchet 21 is sleeved on the motor shaft 11 and is fastened to the motor shaft 11 in the circumferential direction of the motor shaft 11, and the parking ratchet 21 is configured to fit an external ratchet (not shown in the figure) to limit rotation of the motor shaft 11.

Specifically, in this embodiment provided in this application, the motor shaft 11 includes a limiting section 11c. In the axial direction of the motor shaft 11, the limiting section 11c is located between the near bearing 121 and the engagement teeth 13, that is, the limiting section 11c is located, in the axial direction of the motor shaft 11, on the side that is of the near bearing 121 and that is away from the remote bearing 122.

The parking ratchet 21 is sleeved on the limiting section 11c of the motor shaft 11, and is coaxially fastened relative to the motor shaft 11, so that when the motor shaft 11 rotates, the parking ratchet 21 can rotate around the axis of the motor shaft 11 with the motor shaft 11.

It may be understood that the parking ratchet 21 is disposed on the motor shaft 11, and the external ratchet may extend into the housing to limit the rotation of the motor shaft 11, so that the electro-mechanical brake apparatus 100 further has a parking function.

In an embodiment, a spline (not shown in the figure) and a spline groove (not shown in the figure) that fit each other are provided between the motor shaft 11 and the parking ratchet 21, to fasten the parking ratchet 21 to the motor shaft 11.

Specifically, on the limiting section 11c of the motor shaft 11, at least one spline is convexly disposed in the circumferential direction of the motor shaft 11, the spline groove adapted to the spline is provided on an inner surface that is of the parking ratchet 21 and that faces the motor shaft 11, and the spline on the limiting section 11c extends into the spline groove, to limit upward displacement of the parking ratchet 21 in the circumferential direction of the motor shaft 11, and avoid relative rotation between the parking ratchet 21 and the motor shaft 11.

It may be understood that the spline of the limiting section 11c cooperates with the spline groove of the parking ratchet 21, so that the parking ratchet 21 is fastened relative to the motor shaft 11 in the circumferential direction of the motor shaft 11, to achieve that rotation of the motor shaft 11 is limited by using the parking ratchet 21.

In an embodiment, refer to FIG. 7 together with FIG. 6. The brake motor 10 includes a snap ring 14, and in the axial direction of the motor shaft 11, the motor shaft 11 includes a near step surface 111 and a snap ring groove 112 that are spaced apart.

Specifically, as shown in FIG. 6 and FIG. 7, in the radial direction of the motor shaft 11, the motor shaft 11 has a maximum radius R3, and the maximum radius R3 of the motor shaft 11 is greater than a radius R2 of an inner hole of the near bearing 121, that is, an inner hole of the inner ring 1211 of the near bearing 121. Because the inner ring 1211 of the near bearing 121 is sleeved on and fastened to the motor shaft 11, in the axial direction of the motor shaft 11, a radius of a position that is of the motor shaft 11 and that corresponds to the near bearing 121 is less than the maximum radius R3 of the motor shaft 11, so that a difference is formed between radii of the motor shaft 11, and a "step" structure is formed on outer circumferential surfaces of the motor shaft 11 with different radii.

As shown in FIG. 7, a surface that is at a position of the step structure of the motor shaft 11 and that is perpendicular to the axial direction of the motor shaft 11 is constructed as the near step surface 111.

The snap ring groove 112 is provided on an outer circumferential surface of the motor shaft 11. The snap ring groove 112 is disposed at a spacing on a side that is of the near bearing 121 and that is away from the near step surface 111. The snap ring 14 is embedded in the snap ring groove 112, and in the axial direction of the motor shaft 11, a distance between the near step surface 111 and the snap ring 14 is equal to a thickness of the near bearing 121, to fasten the near bearing 121 to the motor shaft 11.

To be specific, when the snap ring 14 is embedded in the snap ring groove 112, in the axial direction of the motor shaft 11, a distance between the near step surface 111 and a surface that is of the snap ring 14 and that faces the near step surface 111 is equal to the thickness of the near bearing 121, so that the near step surface 111 and the surface that is of the snap ring and that faces the near step surface 111 can abut against the near bearing 121 respectively from two opposite ends of the near bearing 121, to limit displacement of the near bearing 121 in the axial direction of the motor shaft 11.

The snap ring 14 cooperates with the near step surface 111 of the motor shaft 11, so that relative fastening between the near bearing 121 and the motor shaft 11 can be implemented, to avoid the following case: The near bearing 121 moves in the axial direction of the motor shaft 11 and supporting effect on the motor shaft 11 is reduced.

It should be noted that the "thickness of the near bearing 121" in this specification of this application is a distance between two opposite surfaces that are of the near bearing 121 and that are in an axial direction of the near bearing 121.

In an embodiment, as shown in FIG. 7, in the radial direction of the motor shaft 11, a radius R1 of the engagement teeth 13 is less than the radius R2 of the inner hole of the near bearing 121.

Specifically, the "radius R1 of the engagement teeth 13" is a radius of the transmission section 11a of the motor shaft 11 in the radial direction of the motor shaft 11. The "radius R2 of the inner hole of the near bearing 121" is a radius of the inner ring 1211 of the near bearing 121 in the radial direction of the near bearing 121, or may be understood as a radius of the middle section 11b of the motor shaft 11 in the radial direction of the motor shaft 11.

In this embodiment, the radius R1 of the engagement teeth 13 is less than the radius R2 of the inner hole of the near bearing 121, so that the near bearing 121 can allowed to be sleeved on the motor shaft 11 from a side close to the transmission section 11a. This facilitates installation of the near bearing 121.

In other words, in the radial direction of the motor shaft 11, a radius of the motor shaft 11 gradually increases from the transmission section 11a to the middle section 11b, so that functional mechanical parts may be sequentially sleeved on the motor shaft 11 from an end that is of the motor shaft 11 and that is close to the transmission section 11a. This can improve installation convenience of each functional mechanical part on the motor shaft 11 and improve assembly efficiency of the brake motor 10.

In an embodiment, FIG. 8 is a sectional diagram of a structure of the brake motor 10 of the electro-mechanical brake apparatus 100 from a side perspective according to an embodiment of this application. As shown in FIG. 8, in the axial direction of the motor shaft 11, the near bearing 121 is fastened to the motor shaft 11.

Specifically, two opposite surfaces that are of the near bearing 121 and that are opposite in the axial direction of the near bearing 121 respectively abut against the near step surface 111 and the snap ring 14, so that the near bearing 121 is fastened relative to the motor shaft 11 in the axial direction of the motor shaft 11, and relative displacement between the near bearing 121 and the motor shaft 11 in the axial direction of the motor shaft 11 can be limited while supporting effect on the motor shaft 11 is implemented.

In other words, the inner ring 1211 of the near bearing 121 is relatively fastened in the axial direction of the motor shaft 11, so that displacement of the motor shaft 11 in the axial direction of the motor shaft 11 in a rotation process can be fixed, a relative distance between the transmission section 11a of the motor shaft 11 and the gearbox 20 can be maintained, and reliable transmission between the transmission section 11a and the gearbox 20 can be ensured. This avoids a bad case in which a transmission connection between the motor shaft 11 and the gearbox 20 fails because the transmission section 11a slides out of the gearbox 20, and improves driving effect on the gearbox 20 when the motor shaft 11 is used as the input shaft of the gearbox 20.

In an embodiment, as shown in FIG. 8, in the axial direction of the motor shaft 11, the remote bearing 122 is slidably connected to the motor shaft 11, that is, the remote bearing 122 may slide in the axial direction of the motor shaft 11 relative to the motor shaft 11.

Specifically, in the radial direction of the motor shaft 11, the maximum radius R3 of the motor shaft 11 is greater than a radius R4 of the inner ring 1221 of the remote bearing 122. Therefore, in the axial direction of the motor shaft 11, the radius of the motor shaft 11 has a difference at a position at which the remote bearing 122 is correspondingly disposed, so that the outer circumferential surface of the motor shaft 11 forms a step structure at a position close to the remote bearing 122 in the axial direction of the motor shaft 11.

A surface, of the motor shaft 11, that is at a position of the step structure close to the remote bearing 122 and that is perpendicular to the axial direction of the motor shaft 11 is constructed as a remote step surface 113. In the axial direction of the motor shaft 11, a surface of a side that is of the remote bearing 122 and that faces the near bearing 121 abuts against the remote step surface 113.

The brake motor 10 includes an elastic member 15, in the axial direction of the motor shaft 11, the elastic member 15 is located on a side that is of the remote bearing 122 and that is away from the remote step surface 113, and abuts between the housing 16 of the brake motor 10 and the remote bearing 122, and the elastic member 15 is configured to provide a pushing force for the remote bearing 122, to enable the remote bearing 122 to be attached to the remote step surface 113 of the motor shaft 11.

For example, as shown in FIG. 8, the elastic member 15 extends in the axial direction of the motor shaft 11, one end of the elastic member 15 abuts against the housing 16 of the brake motor 10, and the opposite end may abut against the outer ring 1222 of the remote bearing 122.

There are two elastic members 15, and the two elastic members 15 are symmetrically distributed at two opposite ends of the remote bearing 122 along the axis of the motor shaft 11, so that the elastic members 15 evenly apply a pushing force in a circumferential direction of the remote bearing 122. This avoids a bad phenomenon that the remote bearing 122 is tilted due to unevenly distributed forces caused by unevenly distributed elastic members 15.

It may be understood that when the elastic member 15 drives the remote bearing 122 to slide in the axial direction of the motor shaft 11 relative to the motor shaft 11, the motor shaft 11 slides in the axial direction of the remote bearing 122 relative to the remote bearing 122 at the same time, to form effect that an end that is of the motor shaft 11 and that is away from the near bearing 121 is in a floating state in the axial direction of the motor shaft 11.

In an operating process of the brake motor 10 and in a process in which the motor shaft 11 cooperates with the gearbox 20 to perform transmission, the motor shaft 11 forms axial stress concentration due to an action such as heat of the brake motor 10 or an engagement force of the gearbox 20. The motor shaft 11 is slidably connected to the remote bearing 122, so that a part of an axial stress of the motor shaft 11 can be released, to protect the motor shaft 11.

In addition, in the embodiment shown in FIG. 8, in the axial direction of the motor shaft 11, the remote bearing 122 is slidably connected to the motor shaft 11, and the near bearing 121 is fastened to the motor shaft 11, so that one end of the motor shaft 11 is in a floating state, and the opposite end is in a fastened state. This can improve a capability of the motor shaft 11 to bear a radial force and an axial force applied by the engagement teeth 13, and improve transmission reliability of the motor shaft 11.

It should be noted that in the embodiment shown in FIG. 8, only an example in which there are two elastic members 15 is used for description. However, it is not limited as that only two elastic members 15 can be disposed in this embodiment of this application. In another embodiment of this application, a quantity of disposed elastic members 15 may be adjusted based on an actual design requirement.

For example, in a possible embodiment, there are a plurality of elastic members 15, and the plurality of elastic members 15 are evenly distributed between the housing 16 of the brake motor 10 and the remote bearing 122 in the circumferential direction of the remote bearing 122, to improve effect of driving, by the elastic member 15, the remote bearing 122 to slide.

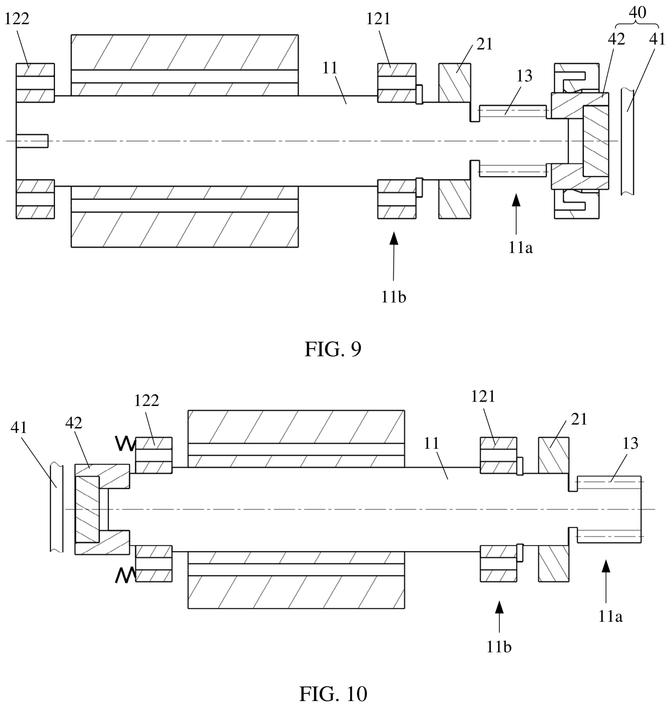

In an embodiment, FIG. 9 is a sectional diagram of a structure of the brake motor 10 of the electro-mechanical brake apparatus 100 from a side perspective according to an embodiment of this application. The electro-mechanical brake apparatus 100 in this application includes a position sensor 40, and the position sensor 40 is configured to monitor a rotation angle of the brake motor 10.

The position sensor 40 includes a stator 41 and a rotor 42. The rotor 42 is located at an end part of the motor shaft 11 and is coaxially fastened to the motor shaft 11, and the stator 41 is fastened relative to the housing 24 of the gearbox 20 or the housing 16 of the brake motor 10.

Specifically, as shown in FIG. 9, the position sensor 40 may be, but is not limited to, a magnetoresistive sensor, and the rotor 42 is sleeved on the motor shaft 11, and is located on a side that is of the transmission section 11a and that is away from the near bearing 121. In this case, the stator 41 of the position sensor 40 is fastened to the housing 24 of the gearbox 20, and the stator 41 is located on a side that is of the housing 24 of the gearbox 20 and that is away from the brake motor 10. When the motor shaft 11 rotates, the motor shaft 11 synchronously drives the rotor 42 to rotate.

In the axial direction of the motor shaft 11, the stator 41 is disposed at a spacing on a side that is of the rotor 42 and that is away from the transmission section 11a, and a central axis of the stator 41 coincides with a rotation axis of the motor shaft 11.

When the motor shaft 11 rotates and synchronously drives the rotor 42 to rotate, the rotor 42 rotates around the rotation axis of the motor shaft 11 relative to the stator 41, and the stator 41 is fastened to the housing 24 of the gearbox 20, to allow rotation of the rotor 42 to implement a monitoring function. In other words, through joint cooperation between the stator 41 and the rotor 42, the position sensor 40 can implement a function of monitoring the rotation angle of the brake motor 10.

It should be noted that the rotor 42 of the position sensor 40 is disposed at the end part of the motor shaft 11 of the brake motor 10, and rotates relative to the stator 41 to fit the stator 41, to implement the function of the position sensor 40 to monitor the rotation angle. Because a part of the motor shaft 11 is located on a side of the gearbox 20, the rotor 42 may be disposed at an end part on a side that is of the motor shaft 11 and that is close to the brake motor 10 or an end part on the side that is of the motor shaft 11 and that is close to the gearbox 20.

In the embodiment shown in FIG. 9, only an example in which the stator 41 and the rotor 42 are located at the end part on the side that is of the motor shaft 11 and that is close to the gearbox 20 is used for description. However, it is not limited as that the position sensor 40 in this embodiment of this application can be disposed only at the end part on the side that is of the motor shaft 11 and that is close to the gearbox 20. In another embodiment of this application, an actual arrangement position of the position sensor 40 may be adjusted based on an actual design requirement and an application scenario.

For example, in a possible embodiment, FIG. 10 is a sectional diagram of a structure of the brake motor 10 of the electro-mechanical brake apparatus 100 from a side perspective according to an embodiment of this application. As shown in FIG. 10, the position sensor 40 may be disposed at the end part on the side that is of the motor shaft 11 and that is close to the brake motor 10.

Specifically, as shown in FIG. 10, the rotor 42 is sleeved on the motor shaft 11, and is located on a side that is of the remote bearing 122 and that is away from the motor rotor 10b. The stator 41 of the position sensor 40 is fastened to the housing 16 of the brake motor 10, and in the axial direction of the motor shaft 11, the stator 41 is disposed at a spacing on a side that is of the rotor 42 and that is away from the remote bearing 122.

In addition, in the embodiments shown in FIG. 9 and FIG. 10, when the position sensor 40 is a magnetoresistive sensor, only a possible arrangement manner of the stator 41 and the rotor 42 of the position sensor 40 is used as an example for description. In another embodiment of this application, the position sensor 40 may alternatively be, but is not limited to, an electric eddy current sensor or a photoelectric sensor.

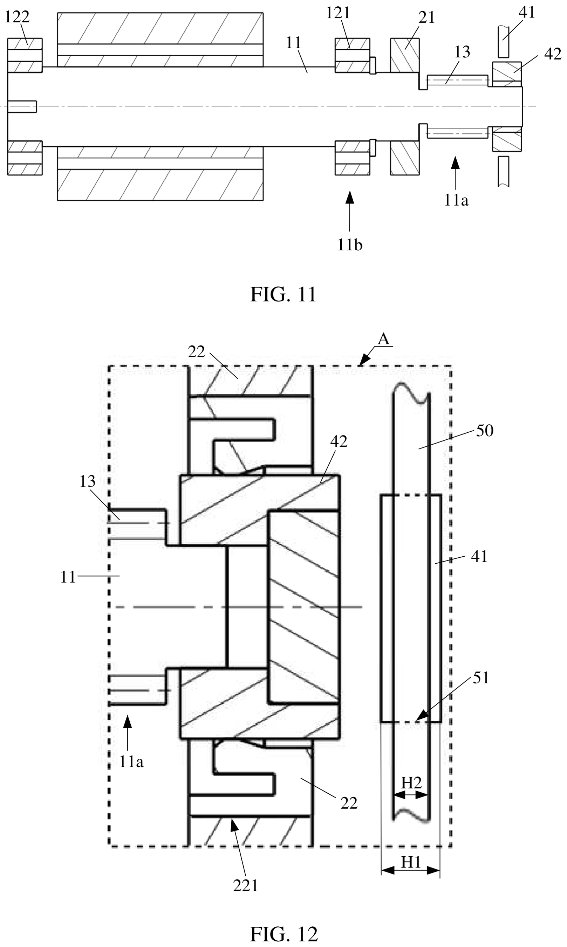

For example, in a possible embodiment, FIG. 11 is a sectional diagram of a structure of the brake motor 10 of the electro-mechanical brake apparatus 100 from a side perspective according to an embodiment of this application. As shown in FIG. 11, when the position sensor 40 is an electric eddy current sensor or a photoelectric sensor, the stator 41 of the position sensor 40 is coaxially sleeved on a periphery of the rotor 42, and in the radial direction of the motor shaft 11, an outer circumferential surface of the rotor 42 and an inner circumferential surface of the stator 41 are spaced apart.

It may be understood that the rotor 42 and the stator 41 of the magnetoresistive sensor are spaced apart in the axial direction of the motor shaft 11, and the rotor 42 and the stator 41 of the electric eddy current sensor or the photoelectric sensor are spaced apart in the radial direction of the motor shaft 11. Different types of position sensors can separately implement reliable installation and monitoring functions.

In an embodiment, FIG. 12 is an enlarged diagram of a partial structure of the brake motor 10 of the electro-mechanical brake apparatus 100 at a position A from a side perspective according to an embodiment of this application. As shown in FIG. 12, a spacer 22 is disposed in the housing 24 of the gearbox 20, and the spacer 22 is configured to separate the gearbox 20 and the position sensor 40.

Specifically, as shown in FIG. 12, in the axial direction of the motor shaft 11, the transmission section 11a of the motor shaft 11, the spacer, and the stator 41 are sequentially spaced apart.

A thickness direction of the spacer 22 is parallel to the axial direction of the motor shaft 11, and it may be understood as that arrangement directions of two opposite surfaces of the spacer 22 in an axis of the spacer 22 are parallel to the axial direction of the motor shaft 11.

Because the gearbox 20 is in a transmission connection to the transmission section 11a, the spacer 22 is disposed between the transmission section 11a and the stator 41, so that the gearbox 20 can be separated from the position sensor 40.

In other words, the stator 41 is fastened to the housing 24 of the gearbox 20, and the rotor 42 is correspondingly disposed at the end part that is of the motor shaft 11 and that is close to the gearbox 20. The spacer 22 to separate the gearbox 20 and the position sensor 40 is disposed, so that the following case can be avoided: A lubricant is spattered on the position sensor 40 in a rotation process of the gearbox 20, and monitoring precision of the position sensor 40 is affected.

In an embodiment, as shown in FIG. 12, the spacer 22 is provided with a through hole 221, and the motor shaft 11 may pass through the through hole 221. The housing 24 of the gearbox 20 includes an oil sealing member 23, and an outer circumferential surface of the oil sealing member 23 is attached to an inner circumferential surface of the through hole 221 to seal the through hole 221. That is, in the radial direction of the motor shaft 11, the oil sealing member 23 is sleeved between the rotor 42 and the through hole 221 of the spacer 22, to achieve effect of sealing the through hole 221.

For example, as shown in FIG. 12, when the position sensor 40 is a magnetoresistive sensor, because the stator 41 is disposed at a spacing, in the axial direction of the motor shaft 11, on a side that is of the rotor 42 and that is away from the gearbox 20, the oil sealing member 23 is sleeved on the periphery of the rotor 42, that is, in the radial direction of the motor shaft 11, the rotor 42 and the oil sealing member 23 are sequentially sleeved on the motor shaft 11, so that the through hole of the spacer 22 can be effectively sealed.

For example, when the position sensor 40 is an electric eddy current sensor or a photoelectric sensor, because in the radial direction of the motor shaft 11, the stator 41 is disposed at a spacing at the periphery of the rotor 42, the oil sealing member 23 is sleeved on a periphery of the motor shaft 11, so that the gearbox 20 and the position sensor 40 can be effectively separated.

It may be understood that corresponding to different types of position sensors 40, the oil sealing member 23 is disposed between the motor shaft 11 and the spacer 22, or the oil sealing member 23 is disposed between the rotor 42 and the spacer 22, so that the through hole 221 of the spacer 22 can be effectively sealed, and direct contact between the lubricant in the gearbox 20 and the position sensor 40 can be avoided. This can ensure monitoring precision of the position sensor 40 and improve a service life of the position sensor 40.

In an embodiment, as shown in FIG. 12, the electro-mechanical brake apparatus 100 includes a circuit board 50, and the circuit board 50 is electrically connected to the brake motor 10 to drive the motor shaft 11 to rotate.

Specifically, as shown in FIG. 12, the circuit board 50 is fastened in the housing 24 of the gearbox 20, and in the axial direction of the motor shaft 11, the circuit board 50 is located on a side that is of the spacer 22 and that faces the stator 41 and is arranged in parallel with the spacer 22.

The circuit board 50 is further electrically connected to the brake motor 10 to drive the motor shaft 11 to rotate, so that integration of the electro-mechanical brake apparatus 100 in this application can be improved and a size can be reduced.

In an embodiment, as shown in FIG. 12, in the axial direction of the motor shaft 11, the circuit board 50 is provided with a positioning hole 51, the positioning hole 51 penetrates the circuit board 50 in a thickness direction of the circuit board 50, and the stator 41 is embedded in the positioning hole 51 of the circuit board 50, to achieve effect that the stator 41 is fastened to and integrated into the circuit board 50.

In addition, a position of the positioning hole 51 corresponds to a position of the rotor 42, so that the stator 41 embedded in the positioning hole 51 can fit and operate with the rotor 42 to implement a monitoring function of the position sensor 40.

It may be understood that the stator 41 of the position sensor 40 is fastened to the circuit board 50, and a signal collected by the position sensor 40 may be directly received and processed by using a component on the circuit board 50, so that a metal wiring structure that is arranged on the stator 41 and the circuit board 50 and that is configured to implement an electrical connection between the stator 41 and the circuit board 50 or the like can be eliminated. This simplifies a structural design of the electro-mechanical brake apparatus 100 in this application.

In an embodiment, in the axial direction of the motor shaft 11, a thickness H1 of the stator 41 is greater than a thickness H2 of the circuit board 50. The stator 41 is embedded in the positioning hole 51 of the circuit board 50, so that it can be ensured that the stator 41 can fit the rotor 42 to implement the monitoring function of the position sensor 40, and after the stator 41 is assembled, an overall thickness of the circuit board 50 can be compressed. In this way, integration between the stator 41 and the circuit board 50 can be further improved, to further reduce space occupied by the circuit board 50 in the housing.

A motor, a mechanical transmission mechanism, and a brake in an electro-mechanical brake apparatus are usually independent components, and an integration level is not high. As a result, the electro-mechanical brake apparatus is too large in size to be arranged in the vehicle.

However, in this application, the electro-mechanical brake apparatus 100 drives, by using the brake motor 10, the gearbox 20 to rotate, to drive the brake 101 to brake the vehicle 2000. The motor shaft 11 of the brake motor 10 extends into the gearbox 20 and is in a transmission connection to the gearbox 20, and the motor shaft 11 of the brake motor 10 can synchronously implement an input shaft function of the gearbox 20. This eliminates a need for a structure through which the motor shaft 11 is in a transmission connection to the input shaft, simplifies an internal structure of the electro-mechanical brake apparatus 100, and reduces a size.

In addition, the electro-mechanical brake apparatus 100 supports the motor shaft 11 through cooperation between the near bearing 121 and the remote bearing 122, to ensure smooth rotation of the motor shaft 11 both in the brake motor 10 and in the gearbox 20. In comparison with a structure in which a motor shaft and an input shaft are separated, in this application, a quantity of bearings in the electro-mechanical brake apparatus 100 is reduced. This further simplifies an internal structure of the electro-mechanical brake apparatus 100 and reduces a size. Further, the vehicle 2000 provided in this application is braked by using the electro-mechanical brake apparatus 100 provided in this application. Because the electro-mechanical brake apparatus 100 provided in this application is small in size, internal space of the vehicle 2000 in this application is saved.

In other words, the vehicle 2000 provided in this application uses the electro-mechanical brake apparatus 100 in any one of the foregoing embodiments. Therefore, the vehicle 2000 in this application has all possible beneficial effect of the electro-mechanical brake apparatus 100 in any one of the foregoing embodiments.

It is clear that a person skilled in the art can make various modifications and variations to this application without departing from the protection scope of this application. This application is intended to cover these modifications and variations of this application provided that they fall within the scope of the claims of this application and an equivalent technology thereof.

## Claims

1. An electro-mechanical brake apparatus with an integrated transmission shaft, wherein the electro-mechanical brake apparatus comprises a brake motor and a gearbox, the brake motor comprises a motor shaft, in an axial direction of the motor shaft, the brake motor is adjacently fastened to the gearbox, an end of the motor shaft extends toward the gearbox and is in a transmission connection to the gearbox, the motor shaft rotates and drives, by using the gearbox, a brake to brake a vehicle, and the brake motor comprises a remote bearing and a near bearing;
an inner ring of the remote bearing is sleeved at an end that is of the motor shaft and that is away from the gearbox, and an outer ring of the remote bearing is supported by a housing of the brake motor; and
an inner ring of the near bearing is sleeved on a middle section of the motor shaft, and an outer ring of the near bearing is supported by the housing of the brake motor or a housing of the gearbox.

2. The electro-mechanical brake apparatus according to claim 1, wherein the motor shaft comprises a transmission section, in the axial direction of the motor shaft, the transmission section is located on a side that is of the near bearing and that is away from the remote bearing, and in a circumferential direction of the motor shaft, engagement teeth configured for a transmission connection to the gearbox are evenly distributed on the transmission section.

3. The electro-mechanical brake apparatus according to claim 2, wherein in a radial direction of the motor shaft, a radius of the engagement teeth is less than a radius of an inner hole of the near bearing.

4. The electro-mechanical brake apparatus according to claim 2, wherein in the axial direction of the motor shaft, the near bearing is fastened to the motor shaft and the remote bearing is slidably connected to the motor shaft.

5. The electro-mechanical brake apparatus according to claim 4, wherein the brake motor comprises a snap ring, in the axial direction of the motor shaft, the motor shaft comprises a near step surface and a snap ring groove that are spaced apart, and the snap ring is embedded in the snap ring groove; and
in the axial direction of the motor shaft, a distance between the near step surface and the snap ring is equal to a thickness of the near bearing, and the snap ring is configured to fasten the near bearing to the motor shaft.

6. The electro-mechanical brake apparatus according to claim 4, wherein the brake motor comprises an elastic member, in the axial direction of the motor shaft, the elastic member abuts between the housing of the brake motor and the remote bearing, and the elastic member is configured to provide a pushing force for the remote bearing, to enable the remote bearing to be attached to a remote step surface of the motor shaft.

7. The electro-mechanical brake apparatus according to any one of claims 2 to 6, wherein the electro-mechanical brake apparatus comprises a position sensor configured to monitor a rotation angle of the brake motor, and the position sensor comprises a stator and a rotor;
the rotor is located at an end part of the motor shaft and is coaxially fastened to the motor shaft; and
the stator is fastened relative to the housing of the gearbox or the housing of the brake motor, and a central axis of the stator coincides with a rotation axis of the motor shaft.

8. The electro-mechanical brake apparatus according to claim 7, wherein the stator is fastened relative to the housing of the gearbox, and a spacer is disposed in the housing of the gearbox;
a thickness direction of the spacer is parallel to the axial direction of the motor shaft; and
in the axial direction of the motor shaft, the transmission section, the spacer, and the stator are sequentially arranged.

9. The electro-mechanical brake apparatus according to claim 8, wherein the position sensor is a magnetoresistive sensor, and in the axial direction of the motor shaft, the rotor and the stator of the position sensor are spaced apart; or
the position sensor is an electric eddy current sensor or a photoelectric sensor, the stator of the position sensor is coaxially sleeved on a periphery of the rotor, and in the radial direction of the motor shaft, an outer circumferential surface of the rotor and an inner circumferential surface of the stator are spaced apart.

10. The electro-mechanical brake apparatus according to claim 9, wherein the spacer is provided with a through hole that allows the motor shaft to pass through, the housing of the gearbox comprises an oil sealing member, and an outer circumferential surface of the oil sealing member is attached to an inner circumferential surface of the through hole to seal the through hole; and
the position sensor is a magnetoresistive sensor, and the oil sealing member is sleeved on the periphery of the rotor; or
the position sensor is an electric eddy current sensor or a photoelectric sensor, and the oil sealing member is sleeved on a periphery of the motor shaft.

11. The electro-mechanical brake apparatus according to claim 8, wherein the electro-mechanical brake apparatus comprises a circuit board, and the circuit board is electrically connected to the brake motor to drive the motor shaft to rotate;
the circuit board is located on a side that is of the spacer and that faces the stator, and the circuit board and the spacer are arranged in parallel; and
the circuit board is fastened in the housing of the gearbox, and the stator is fastened to the circuit board.

12. The electro-mechanical brake apparatus according to claim 11, wherein in the axial direction of the motor shaft, a thickness of the stator is greater than a thickness of the circuit board, and the stator is embedded in a positioning hole of the circuit board.

13. The electro-mechanical brake apparatus according to any one of claims 2 to 6, wherein the gearbox comprises a parking ratchet, the parking ratchet is sleeved on the motor shaft and is fastened to the motor shaft in the circumferential direction of the motor shaft, and the parking ratchet is configured to fit an external ratchet to limit rotation of the motor shaft.

14. The electro-mechanical brake apparatus according to claim 13, wherein the motor shaft comprises a limiting section, the limiting section is located on the side that is of the near bearing and that is away from the remote bearing in the axial direction of the motor shaft, and at least one spline configured to match a spline groove of the parking ratchet is disposed on the limiting section in the circumferential direction of the motor shaft.

15. A vehicle, comprising a wheel and the electro-mechanical brake apparatus according to any one of claims 1 to 14, wherein the electro-mechanical brake apparatus is configured to brake the wheel.
